# EUROPEAN PATENT SPECIFICATION

(11) **EP 2 624 403 B1**
(45) Date of publication and mention of the grant of the patent: **09.12.2020**
(21) Application number: 12153369.9
(22) Date of filing: 31.01.2012
(51) Int. Cl.: H02J 3/18, H02J 3/26, F16L 53/00

(54) **Direct electric heating system for heating a subsea pipeline**
Direktes Elektroheizsystem zum Heizen einer Unterseeleitung
Système de chauffage électrique direct pour le chauffage d'un pipeline sous-marin

(43) Date of publication of application: 07.08.2013
(73) Proprietor: Siemens Aktiengesellschaft, 80333 München (DE)
(72) Inventor: Radan, Damir, 4317 Sandnes (NO)

(56) References cited:
- EP-A1- 2 166 637
- WO-A1-2007/011230
- WO-A2-2006/041313
- JP-A- 63 093 456
- US-A- 3 331 909
- US-A1- 2006 062 029

## Description

### Field of the invention

The invention relates to a direct electric heating system for heating a subsea pipeline and to a method of operating such direct electric heating system.

### Background

Recently, there has been an increasing interest in offshore hydrocarbon production. Hydrocarbon wells can be located many miles from shore sites and in water depths reaching down to several thousand meters. Subsea pipelines can be used for transporting hydrocarbons from an offshore well to a production vessel or to an onshore site, or may be used for transporting hydrocarbons between different onshore sites separated by an offshore section.

In deep waters, the water temperature is relatively low, it may for example be between about -1 and +4 °C. When hydrocarbons are produced from a subsea well, they can comprise a fraction of water, and they furthermore will cool significantly upon reaching the seabed. This can lead to the formation of hydrates, which are generally a combination of pressurized hydrocarbon gas with water. This combination can at low temperatures form a hydrate, which is a solid material. Hydrates can restrict the flow within a pipeline, or may even completely plug the pipeline.

Methods are known in the art which use chemicals for preventing hydrate formation. Another method which is more effective is the increase of the temperature of the pipeline, for example by using direct electric heating (DEH). Such DEH system is for example known from WO 2004/111519, which uses a subsea single phase cable which is attached to two sides of a steel pipeline. A 50/60 Hz AC current is passed through the cable and the pipeline, and the pipeline is heated due to its electric resistance.

The power source is generally located at an onsite location or on board of a production vessel, and an example of such power source is described in WO 2010/031626. The pipeline section to be heated is a single phase load on the power supply arrangement.

The problem of conventional systems is that they are generally restricted to rather short distances between the pipeline section to be heated and the power supply. Also, the length of the pipeline to be heated is only very limited. Long step-out distances can thus generally not be realized. Furthermore, such systems generally lack any means of controlling the heating. Also, there are significant losses of electric energy along the subsea cable to the pipeline, and the subsea cable itself is a very cost intensive product.

The document WO 2007/011230 A1 discloses a system for supplying power to a flow line heating circuit. The system includes a three-phase generation and transmission part which is connected to an electric load via a three-phase to two-phase transformer. The electric load is connected to the secondary side of the three-phase to two-phase transformer so as to form a substantially balanced electric load on the three-phase generation and transmission part.

It is thus desirable to enable the heating of pipeline sections located further away from the main power supply and the heating of longer pipeline sections. Furthermore, it is desirable to reduce currents in the cable supplying the electric power to the pipeline section to be heated, and to provide a fault tolerant heating system. Also, the costs involved in such system should be reduced and the efficiency should be increased.

### Summary

Accordingly, there is a need to obviate at least some of the drawbacks mentioned above and to provide an improved direct electric heating system for the heating of subsea pipelines.

This need is met by the features of the independent claims. The dependent claims describe embodiments of the invention. An embodiment of the invention provides a direct electric heating (DEH) system for heating a subsea pipeline. The DEH system comprises a subsea feeder unit adapted to be installed subsea, in particular in proximity to a pipeline section to be heated. The subsea feeder unit comprises electric connections for coupling the subsea feeder unit to a three phase power source for receiving three phase electric power. The DEH system further comprises electric connections for connecting the feeder unit to a first pipeline section of the subsea pipeline, wherein the electric connections are configured to couple one end of the first pipeline section to a first phase of the power source and to couple the other end of the first pipeline section to a second phase of the power source. The first pipeline section forms a single phase load on the power source. The DEH system further comprises electric connections for connecting the feeder unit to a second pipeline section of the subsea pipeline, wherein the electric connections are configured to couple one end of the second pipeline section to the second phase of the power source and to couple the other end of the second pipeline section to a third phase of the power source. The second pipeline section also forms a single phase load on the power source. Furthermore, a balancing unit is provided which is comprised in the subsea feeder unit and which is configured to balance the load on the phases of the three phase power source.

The subsea feeder unit may be installed in proximity to the pipeline section to be heated i.e. it may be located substantially closer to the first or second pipeline sections than a main power supply, i.e. the three phase power source. By coupling the first and second pipeline sections to the three phase power source as described above, a current can be provided through each of the pipeline sections for heating the respective pipeline sections by means of direct electric heating. By means of the subsea feeder unit, it becomes possible to make use of a power source which supplies three phase AC electric power to the subsea location of the feeder unit, thereby enabling longer step-out distances. By means of the subsea feeder unit, two pipeline sections can be heated, and the load on the power source can be balanced. This reduces negative sequence currents (NSC) in the connection to the power source, which reduces losses of electric energy and furthermore, due to the lower currents, reduces the cost of a cable used to supply the electric power to the subsea feeder unit. Furthermore, the subsea feeder unit may be used for controlling the heating of the two pipeline sections.

In an embodiment, the balancing unit may comprise a current balancing reactor coupled between the first phase and the third phase of the power source. By means of the current balancing reactor, a cost efficient and effective balancing of the load on a three phases of the three phase power source may be achieved.

The current balancing reactor may comprise an inductance connected between the first phase and the third phase of the power source, in particular the coil. The inductance may be adjustable, e.g. using a tap changer or the like. Accordingly, the balancing may be adjusted for different impedances of the first and/or second pipeline sections.

In an embodiment, the direct electric heating system comprises a three phase subsea power cable coupled to the power source, the subsea feeder unit having an electric connection to the three phase subsea power cable for receiving three phase electric power from the power source. By making use of a three phase AC power transmission, the electric power that is been transmitted can be increased, and longer step-out distances can be implemented. The direct electric heating system may comprise further feeder units connected to the three phase subsea power cable for supplying electric power to further pairs of subsea pipeline segments for heating these segments.

As an example, a three core three phase subsea cable may be used. Using such cable, the electric power may be transmitted by using an AC voltage of a range between about 100 and about 200 kV. Such type of power transmission is more efficient and cost effective than power transmission using single core cables.

In an embodiment the subsea feeder unit may further comprise a three phase transformer for adjusting the voltage received from the power source and supplied to the first and second pipeline sections. In particular, the transformer may be connected between the electric connections towards the three phase subsea power cable and the electric connections towards the first and second single phase loads. By means of such transformer, different power load capabilities may be obtained within each individual impedance load, i.e. each pipeline section may be heated separately and independently of the other sections. The voltage supplied across the first and the second pipeline sections can be regulated by the transformer and accordingly, the heating of these pipeline sections can be adjusted. This can be done independently from other pipeline sections which are supplied with electric power by further subsea feeder units coupled to the same three phase subsea power cable.

The transformer may for example comprise a tap changer, such as an on-load tap changer, in particular on the high voltage side for adjusting the output voltage of the transformer.

The subsea feeder unit may further comprise a reactive power compensator for compensating reactive power arising from the first and second single phase loads. Generally, the first and second pipeline sections are an impedance load having resistive and inductive parts resulting in a relatively low power factor. The reactive power compensator may for example generate reactive power for increasing the power factor. Accordingly, currents in the electric connections on the power source to the subsea feeder unit, in particular in the above mentioned three phase subsea power cable that are due to reactive power can be reduced, resulting in a more efficient operation and decreased costs of the direct electric heating system.

The reactive power compensator may for example comprise a capacitor bank, and it may be coupled to the three phases of the power source, for example after the above mentioned transformer. The reactive power compensator may comprise a control interface for enabling control of the amount of reactive power generated. As an example, the capacitors of such capacitor bank may be changed. The switching on and off of the reactive power compensator may also be enabled. Furthermore, by means of the reactive power compensator, the influence of subsea cable capacitance in the three phase cable may be compensated. The direct electric heating system may further comprise a reactive power compensator located before the three phase subsea power cable, i.e. at the topside installation.

The subsea feeder unit may further comprise a circuit breaker for disconnecting the first and second single phase loads from the power source. In particular, it may be a three phase circuit breaker which breaks the electric connection for each phase of the power source. Accordingly, it may become possible to switch on and off the power to the first and/or second pipelines sections. When several feeder units are installed along a subsea power cable, the pairs of pipeline sections can accordingly individually be switched.

In an embodiment, the direct electric heating system further comprises a three phase subsea power cable, and further comprises two or more subsea feeder units. Each subsea feeder unit is connected to the three phase power cable for receiving electric power from the three phase power source. Each subsea feeder unit is further connected to a pair of pipeline sections of the subsea pipeline for providing an independent heating of each pair of pipeline. Accordingly, by means of the three phase power cable, it becomes possible to heat a substantial length of pipeline. By means of the subsea power cable and the feeder units, the power can be distributed to the different pipeline sections, so that by means of the load balancing provided at each feeder unit, long step-out distances and the heating of a plurality of pipeline sections can be achieved.

The subsea feeder unit may comprise a subsea enclosure adapted to enable the installation of the subsea feeder unit adjacent to the section of the subsea pipeline that is to be heated, e.g. in water depths in excess of 50, 100, 500 or even 1.000 meters.

In an embodiment, the subsea feeder unit may comprise a control interface for receiving control signals from a topside installation, wherein the subsea feeder unit is configured such that the current balancing unit, the transformer, the circuit breaker and/or the reactive power compensator are controllable by means of control signals received via the control interface. Accordingly, the DEH system may achieve an automatic load balancing, thus preventing imbalance currents, in particular negative sequence currents on the connecting cables. Further, reactive power may be automatically compensated by controlling the reactive power compensator of each feeder unit. As an example, the voltage at the subsea power cable may be sensed and the reactive power produced may be adjusted accordingly. The adjustment of the generated reactive power, e.g. by an adjustment of the capacitance of a capacitor bank, may be controlled in accordance with the number of subsea feeder units connected to the subsea power cable and may furthermore depend on the cable length and the cable capacitance, so that the reactive power in the system is kept small or even minimized. By controlling the transformer, it becomes possible to regulate the voltage and the heating load simultaneously for the first and second pipeline sections. By control of the circuit breaker, each subsea feeder unit may be disconnected from the DEH system, i.e. may be switched on or off.

In an embodiment, the DEH system may comprise a communication line, in particular an optical communication line, the control interface being coupled to the communication line for communicating with the topside installation. Such communication line may for example be comprised in the subsea power cable. In another embodiment, the direct electric heating system may comprise a power line communication unit, the control interface being coupled to the power line communication unit for communicating with the topside installation via the electric connections to the power source. In such configuration, no additional communication line would be required.

The first and/or second pipeline sections may each comprise between about 1 and about 10 pipeline segments, preferably between about 1 and about 4 pipeline segments. The first and the second sections can be adjoining sections of the subsea pipeline. The subsea feeder unit is preferably installed subsea adjacent to the first and second pipeline sections, for example in proximity to the joint between the first and the second pipeline section. The length of the connecting cables to the ends of the first and second pipeline sections can thus be kept short.

A further embodiment of the invention provides a method of operating a direct electrical heating system for heating a subsea pipeline. The method comprises the steps of: providing electric power from a three phase power source to a subsea feeder unit located subsea; providing a current, by said subsea feeder unit, through a first pipeline section of the subsea pipeline for heating a first pipeline section, the first pipeline section being connected between a first phase and a second phase of the three phase power source; providing a current through a second pipeline section of the subsea pipeline, e.g. by said subsea feeder unit, for heating the second pipeline section, the second pipeline section being connected between the second phase and a third phase of the three phase power source; and balancing the load on the phases of the three phase power source. With the above method, advantages similar to the ones outlined further above with respect to the DEH system may be achieved.

As mentioned above, balancing may be provided by means of an inductance coupled between the first and the third phase of the three phase power source.

In an embodiment, the method may further comprise the step of adjusting the voltage supplied to the first and/or second pipeline section by means of a transformer provided in the subsea feeder unit located subsea in proximity to the first and second pipeline sections. This way, the amount of heating can be controlled for the pipeline section pair.

A further embodiment may comprise the step of compensating reactive power arising from the first and second single phase loads. The compensation may occur by means of the above mentioned reactive power compensator which is provided in the subsea feeder unit located subsea in proximity to the first and second pipeline sections. Currents in the power supply cables that are due to reactive power can thus be kept low.

The method may further comprise the step of adjusting the reactive power compensation in accordance with the number of segments of subsea pipeline comprised in the first and/or second pipeline section. Accordingly, for different impedances of the single phase loads, the reactive power can be compensated.

The method may further comprise the step of adjusting the balancing of the load on the phases of the power source in accordance with the impedance of the first and/or second pipeline sections. Accordingly, imbalance currents can be kept low. Adjustment of the balancing may occur by means of a current balancing reactor which comprises an adjustable inductance. The current balancing reactor can again be provided in the subsea feeder unit.

Furthermore, embodiments of the invention may be carried out by means of the direct electric heating system in any of the configurations described above. Consequently, features described with respect to the DEH system may be combined with the method of operating a DEH system. Vice versa, the above described DEH system may be configured so as to carry out any of the steps described with respect to the above method.

The features of the embodiments of the invention described above and those yet to be explained below can be combined with each other unless noted to the contrary.

### Brief description of the drawings

The foregoing and other features and advantages of the invention will become further apparent from the following detailed description read in conjunction with the accompanying drawings. In the drawings, like reference numerals refer to like elements.
Figure 1 is a schematic block diagram showing a direct electric heating system in accordance with an embodiment of the invention.
Figure 2 is a schematic block diagram showing a direct electric heating system in accordance with an embodiment of the invention which employs several of the subsea feeder units of figure 1.
Figure 3 is a flow diagram illustrating the steps of a method according to an embodiment of the invention.

### Detailed description

In the following, embodiments of the invention will be described in detail with reference to the accompanying drawings. It is to be understood that the following description of embodiments is given only for the purpose of illustration and is not to be taken in a limiting sense.

It should be noted that the drawings are to be regarded as being schematic representations only, and elements in the drawings are not necessarily to scale with each other. Also, the coupling of physical or functional units as shown in the drawings and described hereinafter does not necessarily need to be a direct connection or coupling, but may also be an indirect connection or coupling, i.e. a connection or a coupling with one or more additional intervening elements. A skilled person will further appreciate that the physical or functional units illustrated and described herein with respect to the different embodiments do not necessarily need to be implemented as physically separate units. One or more physical or functional blocks or units may be implemented in a common circuit, circuit element or unit, while other physical or functional blocks or units shown may be implemented in separate circuits, circuit elements or units.

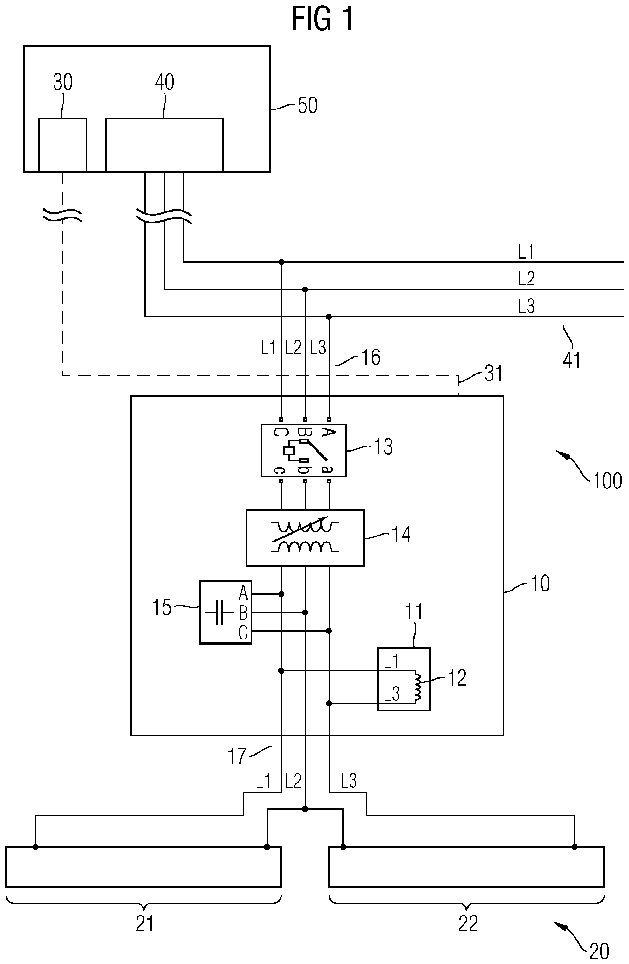

Figure 1 schematically illustrates a direct electric heating (DEH) system 100 which is adapted to heat segments of a subsea pipeline. The DEH system 100 comprises a subsea feeder unit 10, which is also termed DEH module herein. The subsea feeder unit 10 comprises electric connections 16 by means of which feeder unit 10 is coupled to a three phase power source 40. Three phase power source 40 can for example be the three phase main power supply of a topside installation 50 (e.g. a connection to a power grid or one or more generators). A subsea power cable 41 is provided, towards which the electric connections 16 are coupled for supplying the feeder unit 10 with electric power. Subsea power cable 41 may comprise several single phase cables, which may extend along the subsea pipeline 20. Preferably, the cable 41 is a three phase subsea power cable, comprising three cores one for each phase.

Subsea feeder unit 10 further comprises a control interface 31, which by a communication line is connected to a control unit 30 of the topside installation 50. The communication line may for example comprise a fiber optic cable or a copper line, which may be comprised within the subsea power cable 41. In other embodiments, communication may be provided by means of power line communication, for which a power line communication unit (not shown) can be provided within the subsea feeder unit 10. Communication can in the latter case occur via one or more of the lines of the subsea power cable 41.

Via control interface 31, the subsea feeder unit 10 receives control signals from the topside control unit 30. Similarly, it can send information to the topside control unit 30, such as information on voltages applied to sections of the subsea pipeline, voltages on the subsea power cable 41, or information on other parameters of operation.

Subsea feeder unit 10 couples the pipeline sections 21 and 22 of pipeline 20 to the subsea power cable 41 and thus to the three phase power source 40. Note that three phase electric power implies the use of AC (alternating current) electric power. In each phase, the voltage waveform is shifted with respect to the other phases, e.g. by about 120 degrees in case of three phase electric power.

At the output of the subsea feeder unit 10, three phase AC voltage is provided. By means of electric connections 17, the first pipeline section 21 is connected at its ends between the first phase L1 and the second phase L2 of the output of the subsea feeder unit 10. Similarly, the second pipeline section 22 is connected by the electric connections 17 at its ends between the second phase L2 and the third phase L3 of the output of subsea feeder unit 10. Each pipeline section 21, 22 constitutes a single phase load on the output of subsea feeder unit 10. Subsea feeder unit 10 supplies electric power received via the electric connections 16 to the first and second pipeline sections 21, 22. Pipeline sections 21, 22 are made of a conductive material, so that the voltage applied across its ends results in a current flow, which due to the resistance of the respective pipeline section leads to the pipeline section being heated.

By connecting two pipeline sections between different phases of the three phase power source, a first load balancing effect is achieved. Subsea feeder unit 10 further comprises a balancing unit 11 for further balancing the load on the three phases of the power source, so that imbalance currents, i.e. negative sequence currents (NSC) can be reduced or can even be avoided. The balancing unit 11 effectivele distributes the two single phase loads evenly over the three phases of the power source.

For this purpose, the balancing unit 11 comprises a current balancing reactor. The current balancing reactor comprises a coil 12 coupled between the first phase L1 and the second phase L3 of the power source. The inductance of coil 12 may be made adjustable, so that a balancing can be achieved for different impedances of the first and second pipeline sections 21, 22.

By such configuration, it is possible to connect the two single phase loads (pipeline sections 21, 22) via one three phase feeder unit 10. By balancing unit 11, the load put on power cable 41 by subsea feeder unit 10 is generally balanced. The value of the inductance 12 may be adjusted prior to installation, or it may be changed and adjusted automatically, e.g. by means of control signals received via control interface 31. As an example, the inductance 12 may be varied on load, e.g. by means of an adjustable inductor coil having a pick up at variable winding numbers, by adjusting the position of a core or the like.

Accordingly, a single subsea feeder unit 10 already achieves an overall current balance at the connection to the subsea cable 41 and accordingly at the main power supply 40.

The subsea feeder unit or DEH module 10 further comprises a three phase transformer 14, which is coupled between the electric connections 16 and the electric connections 17. By means of the three phase transformer 14, the voltage received from the subsea power cable 41 can be stepped up or stepped down. Accordingly, the electric power supplied to the pipeline sections 21, 22 and thus the heating can be adjusted. It should be clear that if a higher voltage is applied across a pipeline section 21, 22, a higher current will flow through the pipeline section resulting in a higher load on power source 40 and in increased heating. Accordingly, transformer 14 allows the adjustment of the load on power source 40.

Transformer 14 may comprise an on-load tap changer (OLTC). This way, the voltage supplied to the pipeline sections 21, 22 can be adjusted during operation. Accordingly, the heating of pipeline sections 21, 22 can be adjusted independently of other pipeline sections. More heating may for example be provided for pipeline sections located in colder waters.

The transformer ratio may be controllable by means of the control interface 31, i.e. from control unit 30 of topside installation 50.

The voltages used on the subsea power cable 41 and on the connections 17 to pipeline sections 21, 22 depend on the particular operating conditions, in particular on the distance of the pipeline sections 21, 22 to the main power supply 40 and on their individual length. As an example, the voltage supplied by main power supply 40 to the subsea power cable 41 may lie within a range of about 100 kV to about 200 kW it may for example be 130 kV or 150 kV. Accordingly, it is possible to provide heating of pipeline sections at long step-out distances. Transformer 14 may for example step down the voltage to a voltage range of in between 5 and 50 kV, depending on the length of pipeline sections 21, 22. As an example, for pipeline section of 20 km, the voltage may be stepped down to about 10 to 15 kV. By making use of the DEH module 10 comprising the transformer 14 and the balancing unit 11, it becomes possible to provide heating of longer pipeline sections, for example of sections having a length between about 20 and about 100 km. Depending on the particular configuration, pipeline sections of more than 100 km length may even be heated.

In conventional systems, the load provided by the pipeline to be heated on the power supply is generally adjusted in dependence on the goal to obtain an overall current balance at the connection to the main power supply. By the configuration of figure 1, the impedance loads constituted by pipeline sections 21, 22 can essentially freely be adjusted, since the DEH module 10 already provides balancing, so that other loads along the subsea power cable 41 do not need to be considered.

Since the pipeline sections 21, 22 act as impedance loads which may have an inductive component, they may result in a low power factor. DEH module 10 further comprises a reactive power compensator 15 for providing compensation for such low power factor. The reactive power compensator 15 is connected to the first, the second and the third phase of the power source. Reactive power compensator 15 may for example comprise a capacitor bank for generating reactive power. Preferably, the capacitance of such compensator is adjustable. The reactive power compensator may comprise an interface for receiving control signals via the control interface 31. Accordingly, the power factor of the system may be adjusted dynamically. The power factor may for example depend on the number of segments of subsea pipeline within each pipeline section 21, 22. Also, their operating conditions may change the power factor. Accordingly, by enabling the dynamic adjustment of the power factor by means of reactive power compensator 15, the reactive power can be kept low or can be minimized. As a result, the currents in the power supply cable 41 caused by reactive power can also be kept low or minimized, resulting in the possibility of using a less expensive subsea power cable 41, or in enabling a more effective use of the capacity of the subsea power cable 41.

Furthermore, reactive power may arise from the capacitance of the subsea power cable 41. The reactive power may depend on the type of subsea power cable, its length and the further DEH units connected to the subsea power cable 41. Reactive power compensator 15 may also be adjusted for compensation of this reactive power.

As an example, the compensator 15 may communicate via the control interface 31 with the topside system 50 for obtaining information on the number of DEH modules connected in the DEH system 100, on cable length and on cable capacitance, and may adjust its capacitance accordingly. In particular, the voltage level at the subsea power cable connection may be sensed by DEH module 100, and the capacitance level of compensator 15 may be adjusted accordingly.

Furthermore, a further reactive power compensator may be provided at the topside installation 50. Consequently, reactive power can be compensated efficiently, resulting in the above outlined advantages. Such topside reactive power compensator may comprise an inductance for compensating a capacitance of the subsea power cable. Depending on the capacitance of the subsea power cable, the reactive power compensator 15 may also comprise an inductance.

The DEH module 10 furthermore comprises a three phase circuit breaker 13. Three phase circuit breaker 13 is capable of disconnecting the DEH module 10 from the three phases L1, L2 and L3 of the power source 40. It thus becomes possible to disconnect a DEH module 10 from the DEH system 100. This can result in a more fault tolerant operation, since the DEH system 100 can continue to operate, while a particular DEH module 10, or connections 17 to pipeline sections 21, 22 can be serviced. Also, it is possible to selectively switch off the heating of particular pipeline sections.

Again, the circuit breaker 13 may be controlled via control interface 31 from the topside installation 50. Control unit 30 of topside installation 50 can accordingly optimize the operation of the DEH system 100, e.g. by controlling the load balancing by means of the balancing units 11 of each DEH module 10, by controlling the reactive power compensation by means of the reactive power compensator 15 of each DEH module 10, by controlling the amount of heating and the power required by each DEH module 10 by means of transformer 14, and by switching on and off individual DEH modules 10 by means of the three phase circuit breaker 13.

Direct electrical heating may thus be provided for subsea pipelines having considerable length, since at intervals the long the subsea pipeline, DEH modules 10 may be positioned and may be used to heat adjacent pipeline sections. Since each load on the subsea power cable is balanced, it is possible that each subsea feeder unit constitutes an impedance load of a different magnitude, thus enabling the individual heating of pairs of pipeline sections along the subsea power cable. Pipeline sections located in deeper waters may for example be heated with higher electric power, resulting in a higher load.

Each subsea feeder unit or DEH module 10 may comprise a subsea canister. Such canister may be adapted for an installation to water depths of more than 100 m, more than 500 m or even more than 1.000 m. The subsea feeder module 10 is installed in proximity to the first and second pipeline sections 21, 22 to be heated. This means that subsea feeder unit 10 is installed substantially closer to the pipeline sections 21, 22 than the power source 40. In particular, it is desirable to keep the electric connection 17 as short as possible, so as to minimize losses. Accordingly, the subsea feeder unit 10 may be installed adjacent to the joint between the first and second pipeline sections 21, 22.

The subsea power cable 41 may extend along the pipeline 20. It may comprise a communication line, such as a fiber optic communication line or the like. Subsea feeder unit 10 may comprise a modem which is coupled to such communication line, for communicating control interface 31.

Subsea feeder unit 10 may connect to the subsea power cable 41 by means of wet mateable connectors. Accordingly, it becomes possible to connect or disconnect the subsea feeder unit 10 from subsea power cable 41 when installed subsea.

Each section 21, 22 of the subsea pipeline 20 may comprise one or more pipeline segments, e.g. between 1 and 10 pipeline segments. Several segments of the pipeline may for example be welded together, e.g. four segments, and such four segments may constitute a pipeline section 21, 22. Pipeline sections 21, 22 may also comprise only a single pipeline segment.

It should be clear that some of the components of DEH system 100 described above are optional. As an example, the DEH system 100 may also be operated without circuit breakers 13, transformer 14 and reactive power compensator 15. Also, the balancing of balancing unit 11 may be adjusted before installation, so that a control interface 31 towards the topside installation 50 is not necessary. It should be clear that in dependence on the particular application, any of these features may be combined.

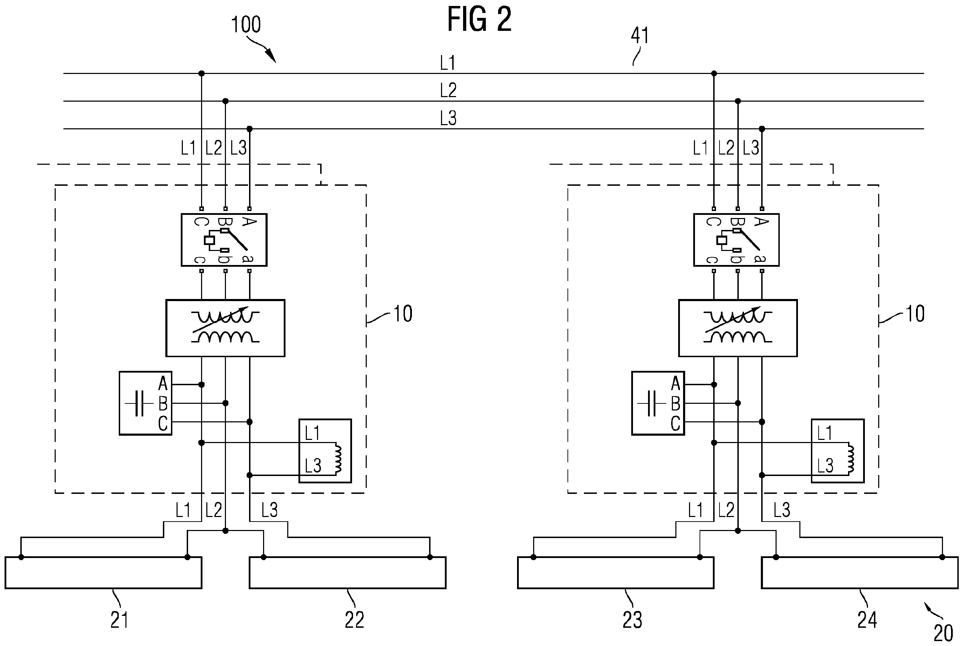

Figure 2 is a schematic block diagram illustrating a larger portion of the DEH system 100 of figure 1. Accordingly, the explanations given further above with respect to figure 1 similarly apply to DEH system 100 of figure 2.

The DEH system 100 of figure 2 comprises two or more DEH modules 10, each DEH module being coupled to a pair of pipeline sections. Accordingly, by two DEH modules 10, pipeline sections 21, 22, 23 and 24 can be heated. Since subsea power cable 41 can provide an efficient transmission of electric power at high voltage, further DEH modules 10 can be coupled to the subsea power cable 41. Accordingly, a considerable length of pipeline 20 can be heated by the DEH system 100. For the purpose of a comprehensive presentation, the topside installation 50 is not shown in figure 2.

The topside installation 50 may be located on board of a vessel, such as a production vessel, a drilling vessel or the like, it may be located on board of a platform, e.g. an offshore oil platform or a semi submersible or it may be an onshore installation. Power source 40 may accordingly comprise one or several generators, or it may comprise a connection to a main power grid.

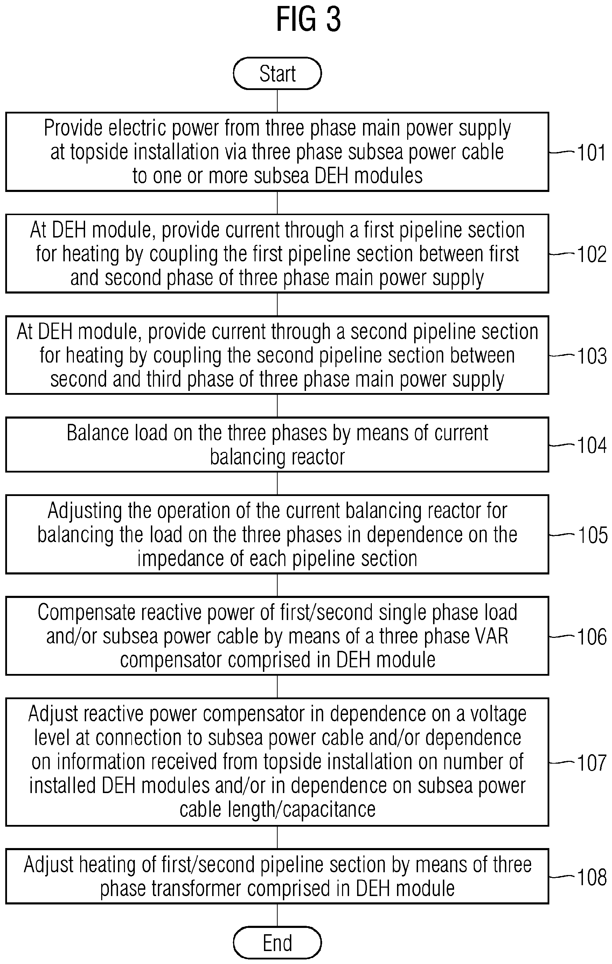

Figure 3 is a flow diagram illustrating an embodiment of a method according to the invention. The method may be carried out on the DEH system 100 in any of the above described configurations. In step 101 electric power is provided from the three phase main power supply 40 at the topside installation 50 via the three phase subsea power cable 41 to one or more subsea DEH modules 10. At the DEH module 10, a current is provided through a first pipeline section 21 for heating the pipeline section by coupling the first pipeline section 21 between the first phase L1 and the second phase L2 of the three phase main power supply 40 (step 102). Similarly, a current is provided at the DEH module through the second pipeline section 22 for heating the pipeline section coupling the second pipeline section 22 between the second phase L2 and the third phase L3 of the three phase main power supply 40.

In step 104, the load on the three phases of the main power supply is balanced by means of the current balancing reactor 11. This may occur by adjusting the load balancing reactor 11 before subsea installation, or by an on-load adjustment of the current balancing reactor, e.g. by control signals provided by control unit 30. This may occur in accordance with feedback from the DEH module 10.

In step 105, the operation of the current balancing reactor is adjusted for balancing the load on the three phases. The adjustment can be made in dependence on the impedance of each pipeline section. Such adjusting step may for example be carried out before starting the operation of the DEH system, i.e. before the heating of the pipeline sections has started.

In step 106, reactive power of the first/second single phase load and/or of the subsea power cable is compensated by means of the three phase reactive power compensator comprised in the DEH module. The compensation may be adjusted during operation of the DEH system 100, or before starting the operation of the DEH system 100 (step 107). The adjustment may for example be performed in dependence on a voltage level at a connection to the subsea power cable and/or in dependence on information received from the topside installation on the number of installed DEH modules and/or in dependence on subsea power cable length/capacitance. Note that this information may be available at the topside installation, and that the control unit of the topside installation may simply send a control signal for adjusting the reactive power compensator, e.g. adjusting the capacitance of a capacitor bank.

The current balancing reactor may also be adjusted during operation of DEH system 100, e.g. for balancing the load on the power source in response to impedance changes.

In step 108, the heating of the first and/or second pipeline section is adjusted by means of a three phase transformer comprised in the DEH module. The adjustment may for example be made by an on-load tap changer of the transformer. Accordingly, the adjustment may be made before operation or during operation of DEH system 100.

It may be clear that some of the steps shown in figure 3 are optional, such as steps 105 to 108. The DEH system may for example be configured for operation before installation, and accordingly, may operate without performing further adjustments.

In summary, a DEH system is provided with one or more DEH modules, each of which enables the heating of two loads, i.e. two subsea pipeline sections. The system allows the balancing of the two single phase loads connected to the three phase power source. Furthermore, the voltage and thus the heating of two pipeline sections can be controlled simultaneously. Also, the heating may be switched on and off for each pair of pipeline sections. By providing a reactive power compensation, currents in the subsea power cable can further be reduced. These possibilities are achieved by each DEH module providing a balanced load on the subsea power cable.

While specific embodiments are disclosed herein, various changes and modifications can be. The present embodiments are to be considered in all respect as illustrative and non-restrictive.

## Claims

1. A direct electric heating system adapted to heat a subsea pipeline (20), comprising
- a subsea feeder unit (10) adapted to be installed subsea in proximity to a pipeline section (21, 22) to be heated, the subsea feeder unit comprising electric connections (16) for coupling the subsea feeder unit to a three phase power source (40) for receiving three phase electric power and an output at which three phase AC voltage is provided for supplying the three phase electric power received via the electric connections (16) to first and second pipeline sections (21, 22),
- electric connections (17) for connecting the feeder unit to the first pipeline section (21) of the subsea pipeline, the electric connections (17) being configured to couple one end of the first pipeline section (21) to a first phase (L1) of the output of the subsea feeder unit (10) and to couple the other end of the first pipeline section (21) to a second phase (L2) of the output of the subsea feeder unit (10), the first pipeline section forming a first single phase load,
- electric connections (17) for connecting the feeder unit (10) to the second pipeline section (22) of the subsea pipeline, the electric connections being configured to couple one end of the second pipeline section (22) to the second phase (L2) of the output of the subsea feeder unit (10) and to couple the other end of the second pipeline section (22) to a third phase (L3) of the output of the subsea feeder unit (10), the second pipeline section forming a second single phase load, and
- a balancing unit (11) comprised in said subsea feeder unit (10) configured to balance the load on the phases (L1, L2, L3) of the three-phase power source (40).

2. The direct electric heating system according to claim 1, wherein the balancing unit (11) comprises a current balancing reactor coupled between the first phase (L1) and the third phase (L3) of the power source.

3. The direct electric heating system according to claim 2, wherein the current balancing reactor comprises an inductance (12) connected between the first phase and the third phase of the power source, in particular a coil.

4. The direct electric heating system according to any of the preceding claims, wherein direct electric heating system (100) comprises a three phase subsea power cable (41) coupled to the power source, the subsea feeder unit (10) having an electric connection (16) to the three phase subsea power cable for receiving three phase electric power from the power source.

5. The direct electric heating system according to any of the preceding claims, wherein the subsea feeder unit (10) further comprises a three phase transformer (14) for adjusting the voltage received from the power source and supplied to the first and second pipeline sections.

6. The direct electric heating system according to any of the preceding claims, wherein the subsea feeder unit (10) further comprises a reactive power compensator (15) for compensating reactive power arising from the first and second single phase loads.

7. The direct electric heating system according to any of the preceding claims, wherein the reactive power compensator (15) comprises a control interface for enabling the control of the amount of reactive power generated.

8. The direct electric heating system according to any of the preceding claims, wherein the subsea feeder unit (10) further comprises a circuit breaker (13) for disconnecting the first and second single phase loads (21, 22) from the power source.

9. The direct electric heating system according to any of the preceding claims, further comprising a three phase subsea power cable (41), and further comprising two or more subsea feeder units (10), each subsea feeder unit being connected to the three phase power cable (41) for receiving electric power from the three phase power source (40), each subsea feeder unit further being connected to a pair of pipeline sections (21, 22; 23,24) of the subsea pipeline for providing an independent heating of each pair of pipeline sections.

10. The direct electric heating system according to any of the preceding claims, wherein the subsea feeder unit (10) comprises a subsea enclosure adapted to enable the installation of the subsea feeder unit (10) adjacent to the subsea pipeline sections (21, 22) to be heated in water depths in excess of 100, 500, or even 1000m.

11. The direct electric heating system according to any of the preceding claims, wherein the subsea feeder unit further comprises a control interface (31) for receiving control signals from a topside installation (50), wherein the subsea feeder unit is configured such that the balancing unit (11), the transformer (14), the circuit breaker (13) and/or the reactive power compensator (15) are controllable by means of control signals received via said control interface (31).

12. The direct electric heating system according to claim 11, wherein direct electric heating system comprises a communication line, in particular a optical communication line, the control interface (31) being coupled to the communication line for communicating with the topside installation (50), or wherein the direct electric heating system comprises a power line communication unit, the control interface (31) being coupled to the power line communication unit for communicating with the topside installation (50) via the electric connections to the power source.

13. A method of operating a direct electric heating system for heating a subsea pipeline (20), the method comprising the steps of
- providing electric power from a three phase power source (40) to a subsea feeder unit (10) adapted to be installed subsea in proximity to a pipeline section (21, 22) to be heated, the subsea feeder unit comprising an output at which three phase AC voltage is provided for supplying the three phase electric power received from the three phase power source (40) to first and second pipeline sections (21, 22),
- providing a current through the first pipeline section (21) of the subsea pipeline for heating the first pipeline section, the first pipeline section (21) being connected between a first phase (L1) and a second phase (L2) of the output of the subsea feeder unit (10),
- providing a current through the second pipeline section (22) of the subsea pipeline for heating the second pipeline section, the second pipeline section (22) being connected between the second phase (L2) and a third phase (L3) of the output of the subsea feeder unit (10),
- balancing the load on the phases (L1, L2, L3) of the three-phase power source (40) by means of a balancing unit comprised in said subsea feeder unit (10).

14. The method according to claim 13, further comprising the step of
- adjusting the voltage supplied to the first and/or second pipeline section (21, 22) by means of a transformer (14) provided in a subsea feeder unit (10) located subsea in proximity to the first and second pipeline sections.

15. The method according to claim 13 or 14, further comprising the step of compensating reactive power arising from the first and second pipeline sections (21, 22).

## Patentansprüche

1. Direktes Elektroheizsystem, das dazu ausgebildet ist, eine Unterseeleitung (20) zu heizen und Folgendes umfasst:
- eine unterseeische Zuführungseinheit (10), die dazu ausgebildet ist, unterseeisch in der Nähe eines zu heizenden Leitungsabschnitts (21, 22) installiert zu werden, wobei die unterseeische Zuführungseinheit elektrische Verbindungen (16) zum Koppeln der unterseeischen Zuführungseinheit mit einer dreiphasige Stromquelle (40) zum Aufnehmen von dreiphasigem elektrischem Strom und einen Ausgang umfasst, an dem dreiphasige Wechselspannung zum Zuführen des über die elektrischen Verbindungen (16) aufgenommenen dreiphasigen elektrischen Stroms zu ersten und zweiten Leitungsabschnitten (21, 22) geliefert wird,
- elektrische Verbindungen (17) zum Verbinden der Zuführungseinheit mit dem ersten Leitungsabschnitt (21) der Unterseeleitung, wobei die elektrischen Verbindungen (17) dazu konfiguriert sind, ein Ende des ersten Leitungsabschnitts (21) mit einer ersten Phase (L1) des Ausgangs der unterseeischen Zuführungseinheit (10) zu koppeln und das andere Ende des ersten Leitungsabschnitts (21) mit einer zweiten Phase (L2) des Ausgangs der unterseeischen Zuführungseinheit (10) zu koppeln, wobei der erste Leitungsabschnitt eine erste einphasige Last bildet,
- elektrische Verbindungen (17) zum Verbinden der Zuführungseinheit (10) mit dem zweiten Leitungsabschnitt (22) der Unterseeleitung, wobei die elektrischen Verbindungen dazu konfiguriert sind, ein Ende des zweiten Leitungsabschnitts (22) mit der zweiten Phase (L2) des Ausgangs der unterseeischen Zuführungseinheit (10) zu koppeln und das andere Ende des zweiten Leitungsabschnitts (22) mit einer dritten Phase (L3) des Ausgangs der unterseeischen Zuführungseinheit (10) zu koppeln, wobei der zweite Leitungsabschnitt eine zweite einphasige Last bildet, und
- eine in der unterseeischen Zuführungseinheit (10) enthaltene Verteilereinheit (11), die dazu konfiguriert ist, die Last auf die Phasen (L1, L2, L3) der dreiphasigen Stromquelle (40) zu verteilen.

2. Direktes Elektroheizsystem nach Anspruch 1, wobei die Verteilereinheit (11) eine stromausgleichende Drosselspule umfasst, die zwischen der ersten Phase (L1) und der dritten Phase (L3) der Stromquelle gekoppelt ist.

3. Direktes Elektroheizsystem nach Anspruch 2, wobei die stromausgleichende Drosselspule eine Induktanz (12), die zwischen der ersten Phase und der dritten Phase der Stromquelle verbunden ist, insbesondere eine Spule, umfasst.

4. Direktes Elektroheizsystem nach einem der vorhergehenden Ansprüche, wobei das direkte Elektroheizsystem (100) ein dreiphasiges Unterseestromkabel (41) umfasst, das mit der Stromquelle gekoppelt ist, wobei die unterseeische Zuführungseinheit (10) eine elektrische Verbindung (16) zu dem dreiphasigen Unterseestromkabel zum Aufnehmen von dreiphasigem elektrischem Strom von der Stromquelle aufweist.

5. Direktes Elektroheizsystem nach einem der vorhergehenden Ansprüche, wobei die unterseeische Zuführungseinheit (10) ferner einen dreiphasigen Transformator (14) zum Einstellen der von der Stromquelle aufgenommen und den ersten und zweiten Leitungsabschnitten zugeführten Spannung umfasst.

6. Direktes Elektroheizsystem nach einem der vorhergehenden Ansprüche, wobei die unterseeische Zuführungseinheit (10) ferner einen Blindleistungskompensator (15) zum Kompensieren der Blindleistung, die aus den ersten und zweiten einphasigen Lasten entsteht, umfasst.

7. Direktes Elektroheizsystem nach einem der vorhergehenden Ansprüche, wobei der Blindleistungskompensator (15) eine Steuerschnittstelle zum Ermöglichen der Steuerung der Menge der erzeugten Blindleistung umfasst.

8. Direktes Elektroheizsystem nach einem der vorhergehenden Ansprüche, wobei die unterseeische Zuführungseinheit (10) ferner einen Trennschalter (13) zum Trennen der ersten und zweiten einphasigen Lasten (21, 22) von der Stromquelle umfasst.

9. Direktes Elektroheizsystem nach einem der vorhergehenden Ansprüche, das ferner ein dreiphasiges Unterseestromkabel (41) umfasst und ferner zwei oder mehr unterseeische Zuführungseinheiten (10) umfasst, wobei jede unterseeische Zuführungseinheit zum Aufnehmen von elektrischem Strom von der dreiphasigen Stromquelle (40) mit dem dreiphasigen Unterseestromkabel (41) verbunden ist, wobei jede unterseeische Zuführungseinheit ferner mit einem Paar von Leitungsabschnitten (21, 22; 23, 24) der Unterseeleitung zur Bereitstellung einer unabhängigen Heizung jedes Paars von Leitungsabschnitten verbunden ist.

10. Direktes Elektroheizsystem nach einem der vorhergehenden Ansprüche, wobei die unterseeische Zuführungseinheit (10) ein unterseeisches Gehäuse umfasst, das dazu ausgebildet ist, die Installation der unterseeischen Zuführungseinheit (10) benachbart zu den zu heizenden Leitungsabschnitten (21, 22) in Wassertiefen über 100, 500 oder sogar 1.000 m zu ermöglichen.

11. Direktes Elektroheizsystem nach einem der vorhergehenden Ansprüche, wobei die unterseeische Zuführungseinheit ferner eine Steuerschnittstelle (31) zum Empfangen von Steuersignalen von einer überseeischen Installation (50) umfasst, wobei die unterseeische Zuführungseinheit so konfiguriert ist, dass die Verteilereinheit (11), der Transformator (14), der Trennschalter (13) und/oder der Blindleistungskompensator (15) mithilfe von Steuersignalen, die über die Steuerschnittstelle (31) empfangen werden, steuerbar sind.

12. Direktes Elektroheizsystem nach Anspruch 11, wobei das direkte Elektroheizsystem eine Kommunikationsleitung, insbesondere eine optische Kommunikationsleitung umfasst, wobei die Steuerschnittstelle (31) zum Kommunizieren mit der überseeischen Installation (50) mit der Kommunikationsleitung gekoppelt ist, oder wobei das direkte Elektroheizsystem eine Stromleitungs-Kommunikationseinheit umfasst, wobei die Steuerschnittstelle (31) zum Kommunizieren mit der überseeischen Installation (50) über die elektrischen Verbindungen zu der Stromquelle mit der Stromleitungs-Kommunikationseinheit gekoppelt ist.

13. Verfahren zum Betrieb eines direkten Elektroheizsystems zum Heizen einer Unterseeleitung (20), wobei das Verfahren die folgenden Schritte umfasst:
- Liefern von elektrischem Strom von einer dreiphasigen Stromquelle (40) zu einer unterseeischen Zuführungseinheit (10), die dazu ausgebildet ist, unterseeisch in der Nähe eines zu heizenden Leitungsabschnitts (21, 22) installiert zu werden, wobei die unterseeische Zuführungseinheit einen Ausgang umfasst, an dem dreiphasige Wechselspannung zum Zuführen des von der dreiphasigen Stromquelle (40) aufgenommenen dreiphasigen elektrischen Stroms zu ersten und zweiten Leitungsabschnitten (21, 22) bereitgestellt wird,
- Liefern eines Stroms durch den ersten Leitungsabschnitt (21) der Unterseeleitung zum Heizen des ersten Leitungsabschnitts, wobei der erste Leitungsabschnitt (21) zwischen einer ersten Phase (L1) und einer zweiten Phase (L2) des Ausgangs der unterseeischen Zuführungseinheit (10) verbunden ist,
- Liefern eines Stroms durch den zweiten Leitungsabschnitt (22) der Unterseeleitung zum Heizen des zweiten Leitungsabschnitts, wobei der zweite Leitungsabschnitt (22) zwischen der zweiten Phase (L2) und einer dritten Phase (L3) des Ausgangs der unterseeischen Zuführungseinheit (10) verbunden ist,
- Verteilen der Last auf die Phasen (L1, L2, L3) der dreiphasigen Stromquelle (40) mithilfe einer in der unterseeischen Zuführungseinheit (10) enthaltenen Verteilereinheit.

14. Verfahren nach Anspruch 13, das ferner die folgenden Schritte umfasst:
- Einstellen der dem ersten und/oder zweiten Leitungsabschnitt (21, 22) zugeführten Spannung mithilfe eines in einer unterseeischen Zuführungseinheit (10), die sich unterseeisch in der Nähe der ersten und zweiten Leitungsabschnitte befindet, vorgesehenen Transformators (14) .

15. Verfahren nach Anspruch 13 oder 14, das ferner den Schritt des Kompensierens der Blindleistung, die aus den ersten und zweiten einphasigen Leitungsabschnitten (21, 22) entsteht, umfasst.

## Revendications

1. Système de chauffage électrique direct adapté en vue de chauffer un pipeline sous-marin (20), comprenant :
- une unité d'alimentation sous-marine (10) adaptée en vue d'être installée sous l'eau à proximité d'un tronçon (21, 22) de pipeline à chauffer, l'unité d'alimentation sous-marine comprenant des connexions électriques (16) servant à coupler l'unité d'alimentation sous-marine à une source (40) de courant triphasé en vue de recevoir du courant électrique triphasé et une sortie à laquelle une tension alternative triphasée est fournie, servant à amener le courant électrique triphasé reçu via les connexions électriques (16) jusqu'aux premier et deuxième tronçons (21, 22) de pipeline ;
- des connexions électriques (17) servant à connecter l'unité d'alimentation au premier tronçon (21) de pipeline du pipeline sous-marin, les connexions électriques (17) étant configurées en vue de coupler une extrémité du premier tronçon (21) de pipeline à une première phase (L1) de la sortie de l'unité d'alimentation sous-marine (10) et de coupler l'autre extrémité du premier tronçon (21) de pipeline à une deuxième phase (L2) de la sortie de l'unité d'alimentation sous-marine (10), le premier tronçon de pipeline formant une première charge monophasée ;
- des connexions électriques (17) servant à connecter l'unité d'alimentation (10) au deuxième tronçon (22) de pipeline du pipeline sous-marin, les connexions électriques étant configurées en vue de coupler une extrémité du deuxième tronçon (22) de pipeline à la deuxième phase (L2) de la sortie de l'unité d'alimentation sous-marine (10) et de coupler l'autre extrémité du deuxième tronçon (22) de pipeline à une troisième phase (L3) de la sortie de l'unité d'alimentation sous-marine (10), le deuxième tronçon de pipeline formant une deuxième charge monophasée, et
- une unité d'équilibrage (11) comprise dans ladite unité d'alimentation sous-marine (10) configurée en vue d'équilibrer la charge sur les phases (L1, L2, L3) de la source (40) de courant triphasé.

2. Système de chauffage électrique direct selon la revendication 1, étant entendu que l'unité d'équilibrage (11) comprend un réacteur d'équilibrage de courant monté entre la première phase (L1) et la troisième phase (L3) de la source de courant.

3. Système de chauffage électrique direct selon la revendication 2, étant entendu que le réacteur d'équilibrage de courant comprend une inductance (12) montée entre la première phase et la troisième phase de la source de courant, en particulier une bobine.

4. Système de chauffage électrique direct selon l'une quelconque des revendications précédentes, étant entendu que le système de chauffage électrique direct (100) comprend un câble électrique sous-marin triphasé (41) couplé à la source de courant, l'unité d'alimentation sous-marine (10) comportant une connexion électrique (16) au câble électrique sous-marin triphasé en vue de recevoir du courant électrique triphasé de la source de courant.

5. Système de chauffage électrique direct selon l'une quelconque des revendications précédentes, étant entendu que l'unité d'alimentation sous-marine (10) comprend par ailleurs un transformateur triphasé (14) en vue d'adapter la tension reçue de la source de courant et amenée jusqu'aux premier et deuxième tronçons de pipeline.

6. Système de chauffage électrique direct selon l'une quelconque des revendications précédentes, étant entendu que l'unité d'alimentation sous-marine (10) comprend par ailleurs un compensateur (15) de puissance réactive en vue de compenser la puissance réactive provenant des première et deuxième charges monophasées.

7. Système de chauffage électrique direct selon l'une quelconque des revendications précédentes, étant entendu que le compensateur (15) de puissance réactive comprend une interface de régulation en vue de permettre la régulation de la quantité de puissance réactive produite.

8. Système de chauffage électrique direct selon l'une quelconque des revendications précédentes, étant entendu que l'unité d'alimentation sous-marine (10) comprend par ailleurs un disjoncteur (13) servant à séparer de la source de courant les première et deuxième charges triphasées (21, 22).

9. Système de chauffage électrique direct selon l'une quelconque des revendications précédentes, comprenant par ailleurs un câble électrique sous-marin triphasé (41) et comprenant par ailleurs deux ou plusieurs unités d'alimentation sous-marines (10), chaque unité d'alimentation sous-marine étant reliée au câble électrique sous-marin triphasé (41) en vue de recevoir du courant électrique de la source (40) de courant triphasé, chaque unité d'alimentation sous-marine étant par ailleurs reliée à une paire de tronçons (21, 22 ; 23, 24) de pipeline du pipeline sous-marin en vue d'assurer un chauffage indépendant de chaque paire de tronçons de pipeline.

10. Système de chauffage électrique direct selon l'une quelconque des revendications précédentes, étant entendu que l'unité d'alimentation sous-marine (10) comprend une enceinte sous-marine adaptée en vue de permettre d'installer l'unité d'alimentation sous-marine (10) adjacente aux tronçons (21, 22) de pipeline sous-marin à chauffer à des profondeurs d'eau supérieures à 100, 500 ou même 1000 m.

11. Système de chauffage électrique direct selon l'une quelconque des revendications précédentes, étant entendu que l'unité d'alimentation sous-marine comprend par ailleurs une interface de régulation (31) en vue de recevoir des signaux de régulation d'une installation de surface (50), étant entendu que l'unité d'alimentation sous-marine est configurée de telle sorte que l'unité d'équilibrage (11), le transformateur (14), le disjoncteur (13) et/ou le compensateur (15) de puissance réactive sont régulables au moyen de signaux de régulation reçus par le biais de ladite interface de régulation (31).

12. Système de chauffage électrique direct selon la revendication 11, étant entendu que le système de chauffage électrique direct comprend une ligne de communication, en particulier une ligne de communication optique, l'interface de régulation (31) étant couplée à la ligne de communication en vue de communiquer avec l'installation de surface (50), ou étant entendu que le système de chauffage électrique direct comprend une unité de communication sur ligne électrique, l'interface de régulation (31) étant couplée à l'unité de communication sur ligne électrique en vue de communiquer avec l'installation de surface (50) par le biais des connexions électriques à la source de courant.

13. Procédé de fonctionnement d'un système de chauffage électrique direct servant à chauffer un pipeline sous-marin (20), le procédé comprenant les étapes consistant :
- à amener du courant électrique depuis une source (40) de courant triphasé jusqu'à une unité d'alimentation sous-marine (10) adaptée en vue d'être installée sous l'eau à proximité d'un tronçon (21, 22) de pipeline à chauffer, l'unité d'alimentation sous-marine comprenant une sortie au niveau de laquelle une tension alternative triphasée est fournie, en vue d'amener le courant électrique triphasé reçu de la source (40) de courant triphasé jusqu'aux premier et deuxième tronçons (21, 22) de pipeline ;
- à fournir un courant traversant le premier tronçon (21) de pipeline du pipeline sous-marin en vue de chauffer le premier tronçon de pipeline, le premier tronçon (21) de pipeline étant monté entre une première phase (L1) et une deuxième phase (L2) de la sortie de l'unité d'alimentation sous-marine (10) ;
- à fournir un courant traversant le deuxième tronçon (22) de pipeline du pipeline sous-marin en vue de chauffer le deuxième tronçon de pipeline, le deuxième tronçon (22) de pipeline étant monté entre la deuxième phase (L2) et une troisième phase (L3) de la sortie de l'unité d'alimentation sous-marine (10) ;
- à équilibrer la charge sur les phases (L1, L2, L3) de la source (40) de courant triphasé au moyen d'une unité d'équilibrage comprise dans ladite unité d'alimentation sous-marine (10).

14. Procédé selon la revendication 13, comprenant par ailleurs l'étape consistant :
- à adapter la tension amenée au premier et/ou au deuxième tronçon (21, 22) de pipeline au moyen d'un transformateur (14) prévu dans une unité d'alimentation sous-marine (10) située sous l'eau à proximité des premier et deuxième tronçons de pipeline.

15. Procédé selon la revendication 13 ou 14, comprenant par ailleurs l'étape consistant à compenser la puissance réactive provenant des premier et deuxième tronçons (21, 22) de pipeline.
